# EUROPÄISCHE PATENTSCHRIFT

(11) **EP 0 678 755 B1**
(45) Veröffentlichungstag und Bekanntmachung des Hinweises auf die Patenterteilung: **28.08.2002**
(21) Anmeldenummer: 95104880.0
(22) Anmeldetag: 01.04.1995
(51) Int. Cl.: G01S 3/786, G01S 13/86, F41G 7/00

(54) **Einrichtung zur passiven Freund/Feind-Unterscheidung**
Passive identification friend or foe device
Dispositif passif d'identification d'ami-d'ennemi

(30) Priorität: 21.04.1994 DE 4413916
(43) Veröffentlichungstag der Anmeldung: 25.10.1995
(73) Patentinhaber: Bodenseewerk Gerätetechnik GmbH, 88662 Überlingen (DE)
(72) Erfinder: Hoch, Heinz, Dr., D-88634 Herdwangen (DE)
(74) Vertreter: Weisse, Jürgen, Dipl.-Phys.

(56) Entgegenhaltungen:
- DE-A- 3 432 892
- DE-A- 3 435 634
- GB-A- 2 242 590
- US-A- 3 934 250
- US-A- 4 843 459

## Beschreibung

Die Erfindung betrifft eine Einrichtung zur passiven Freund/Feind-Unterscheidung von Zielen, insbesondere von Luftzielen, bei welcher ein zu identifizierendes Ziel mittels einer Videokamera beobachtet wird.

Moderne Kampfflugzeuge oder Luftabwehr-Stellungen besitzen Lenkflugkörper, mit denen feindliche Flugzeuge schon aus großer Entfernung bekämpft werden können. Dabei können die Entfernungen zu den zu bekämpfenden Flugzeugen im Zeitpunkt des Abschusses des Lenkflugkörpers so groß sein, daß die Ziele nicht mehr eindeutig identifiziert werden können. Es besteht daher die Gefahr, daß irrtümlich ein "freundliches" Flugzeug bekämpft wird.

Um zu verhindern, daß irrtümlich das falsche Flugzeug abgeschossen wird, sind "IFF"-Geräte (Identification Friend or Foe) bekannt. Ein solches IFF-Gerät sendet Abfrage-Signale aus, die das Ziel "befragen", ob es ein Freund ist. Wenn das Flugzeug ein Freund ist und ein entsprechendes IFF-Gerät besitzt, so versteht es diese Frage. Es sendet dann verschlüsselt die Antwort, daß es "freundlich" ist. Die IFF-Geräte können mit Radiowellen, RADAR oder Laser arbeiten.

Diese IFF-Geräte haben den Nachteil, daß das befragte Flugzeug das entsprechende Antwortgerät haben muß. Die richtigen Antworten ändern sich dabei üblicherweise täglich. Das bringt Probleme bei multinationalen Verbänden. Ein weiterer Nachteil besteht darin, daß es sich um ein aktives Verfahren handelt: Es wird ein Abfrage-Signal ausgesandt. Durch dieses Abfrage-Signal gibt sich der Frager einem möglichen Feind zu erkennen.

Es sind für zweisitzige Kampfflugzeuge passive Identifikationsgeräte zur Freund/Feind-Unterscheidung bekannt, die mit einer Videokamera arbeiten. Mittels der Videokamera wird dem Kampfbeobachter im Flugzeug ein hochvergrößertes Bild des Ziels auf einem Monitor dargestellt. Damit können Identifikations-Reichweiten von ungefähr 20 km erreicht werden. Dabei ergeben sich Probleme dadurch, daß das Bild infolge von Vibrationen des Flugzeugs nicht stabil ist. Der Kampfbeobachter muß sich relativ lange auf das Bild konzentrieren, um das Ziel sicher zu identifizieren.

Der Erfindung liegt die Aufgabe zugrunde, eine passive Freund/Feind-Unterscheidung von Zielen, insbesondere von Luftzielen, mittels einer Videokamera zu verbessern.

Erfindungsgemäß wird diese Aufgabe dadurch gelöst, daß die Videokamera um zwei Achsen ausrichtbar gelagert und durch eine von Zielstrahlung gesteuerte Nachführeinrichtung auf das Ziel ausrichtbar ist.

Bei einer solchen Anordnung wird die Videokamera mit Hilfe von Zielstrahlung, also von Strahlung, die von dem Ziel ausgesandt oder reflektiert wird, auf das Ziel ausgerichtet. Die Videokamera kann sich dabei um zwei Achsen bewegen. Die Ausrichtung kann dadurch von der Bewegung des Tägers, also insbesondere eines Kampfflugzeugs entkoppelt auf das Ziel ausgerichtet gehalten werden.

Die Zielstrahlung kann von einem Flugkörpersuchkopf erfaßt werden, durch den die Nachführeinrichtung steuerbar ist. Der Flugkörpersuchkopf wird sowieso auf das zu bekämpfende Ziel ausgerichtet und verfolgt dieses. Die dabei erhaltenen Signale können parallel dazu die Ausrichtung des Identifikationsgerätes bewirken.

Die Zielstrahlung kann auch Radarstrahlung sein, die an dem Ziel reflektiert wird. Dann kann das üblicherweise im Kampfflugzeug vorhandene RADAR ausgenutzt werden, um die Videokamera auszurichten.

Es kann aber auch die Zielstrahlung von der Videokamera selbst erfaßt werden und die Nachführeinrichtung von durch Bildverarbeitung des Fernsehbildes gewonnenen Steuersignalen gesteuert sein. Dann richtet sich die Videokamera selbst anhand des von ihr erfaßten Bildes auf das Ziel aus.

Um Störungen durch die Eigenbewegungen des Kampfflugzeugs zu vermeiden kann die Videokamera auf einer inertial stabilisierten Plattform angeordnet sein. Die Plattform wird dann durch Stellsignale unabhängig von den Bewegungen des Kampfflugzeuges auf das Ziel ausgerichtet. Zu diesem Zweck können die Stellsignale z.B. auf Drehmomenterzeuger von stabilisierenden Kreiseln aufgeschaltet werden.

Zur Identifizierung des Ziels kann das von der Videokamera erfaßte Ziel auf dem Bildschirm eines Monitors abgebildet werden. Dabei kann das Bild des Ziels auf dem Monitor durch mittels Bildverarbeitung gewonnener Transformations-Signale im wesentlichen stillstehend in der Mitte des Bildschirms gehalten werden. Damit ist eine ungestörte Beobachtung und Identifizierung des Ziels möglich.

Um einerseits ein Erfassen des Ziels in einem relativ großen Raumwinkel zu ermöglichen und andererseits das Ziel mit hoher Vergrößerung und Auflösung zur Identifizierung zu können, kann die Videokamera ein Zoom-Objektiv aufweisen, das in einer Zielauffassungs-Phase auf eine relativ kurze Brennweite und nach Zielauffassung und Ausrichtung der optischen Achse der Videokamera auf das Ziel auf eine relativ lange Brennweite und entsprechend stärkere Vergrößerung einstellbar ist.

vorteilhaft sind Bildverarbeitungsmittel zur Verstärkung des Kontrastes des Zielbildes gegenüber der Umgebung.

Es können auch Bildverarbeitungsmittel zur automatischen Auswertung des von der Videokamera erhaltenen Bildes des Ziels zur Erkennung freundlicher und feindlicher Ziele.vorgesehen sein.

Ein Ausführungsbeispiel der Erfindung ist nachstehend unter Bezugnahme auf die zugehörigen Zeichnungen näher erläutert.
- Fig.1: zeigt ein Blockschaltbild einer Einrichtung zur passiven Freund/Feind-Unterscheidung Zielen, insbesondere von Luftzielen, bei welcher ein zu identifizierendes Ziel mittels einer Videokamera beobachtet wird.
- Fig.2: ist eine schematisch-perspektivische Darstellung und veranschaulicht eine bevorzugte Art der Ausbildung und Anbringung der Einrichtung an einem Kampfflugzeug.
- Fig.3: ist eine schematische Darstellung und zeigt die Ausrichtung der Plattform nach Signalen, die von dem Suchkopf eines zielverfolgenden Flugkörpers geliefert werden.
- Fig.4: ist eine schematische Darstellung und zeigt eine Anordnung, bei welcher die Plattform nach Stellsignalen ausrichtbar ist, welche durch Bildverarbeitung aus den Signalen der Videokamera selbst gewonnen werden.
- Fig.5: ist ein Blockschaltbild und zeigt die Aufschaltung von Stellsignalen auf eine inertial stabilisierte Plattform.

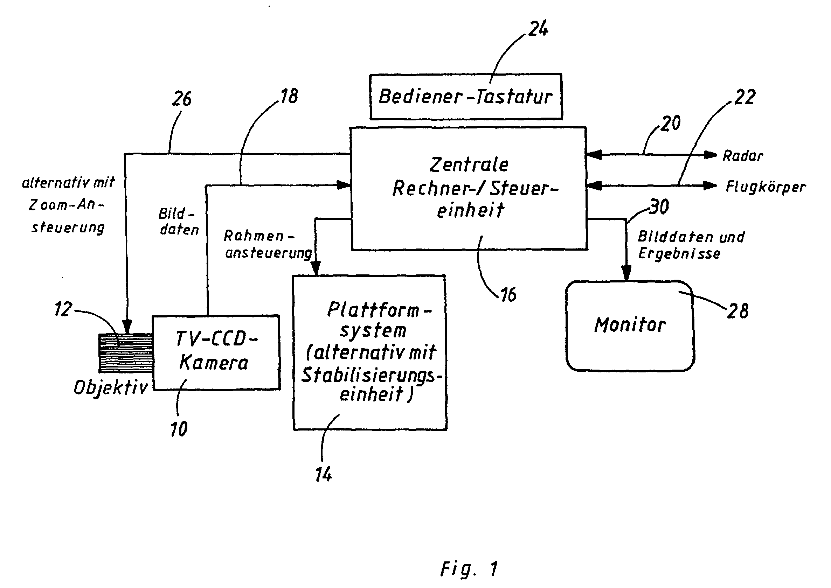

In Fig.1 ist mit 10 eine CCD-Videokamera mit einem Zoom-Objektiv 12 bezeichnet. Die Videokamera sitzt auf einer Plattform 14. Die Plattform 14 ist durch eine Trägheitssensor-Einheit inertial stabilisiert und dadurch von den Bewegungen des Träger-Kampfflugzeugs entkoppelt. Das Bildsignal der Videokamera 10 ist auf eine zentrale Rechner- und Steuer-Einheit 16 aufgeschaltet. Das ist in Fig.1 durch die Verbindung 18 dargestellt.

Die zentrale Rechner- und Steuer-Einheit 16 erhält Daten von einem in dem Kampfflugzeug installierten RADAR, wie durch den Doppelpfeil 20 dargestellt ist, oder von einem Flugkörper mit einem zielverfolgenden Suchkopf, wie durch den Doppelpfeil 22 dargestellt ist. Der Flugkörper wird von einem Bediengerät 24 eingewiesen.

Die zentrale Rechner- und Steuer-Einheit 16 steuert das Zoom-Objektiv 12. Das ist durch die Verbindung 26 dargestellt. Die zentrale Rechner- und Steuer-Einheit 16 liefert Daten an einen Monitor 28. Das ist durch eine Verbindung 30 dargestellt. Die Daten können Identifikations-Ergebnisse sein, die von der Rechner- und Steuer-Einheit 16 durch Bildverarbeitung und Vergleich mit gespeicherten Mustern "freundlicher" und "feindlicher" Flugzeuge gebildet werden. Es kann aber auch das Bild des Ziels unmittelbar auf dem Bildschirm des Monitors dargestellt werden.

Die Darstellung von Fig.1 beinhaltet verschiedene Möglichkeiten:

Die zentrale Rechner- und Steuer-Einheit 16 empfängt vom RADAR des Träger-Kampfflugzeugs bzw. der Luftabwehrstellung die Information über die Zielrichtung. Alternativ kann diese Information auch von dem auf das Ziel ausgerichteten Suchkopf eines Flugkörpers erhalten werden. Die Rechner- und Steuer-Einheit berechnet daraus Ansteuersignale für die Nachführung der Plattform 14. Durch diese Ansteuersignale wird die Plattform 14 so ausgerichtet, daß die optische Achse der Videokamera 10 auf das ziel gerichtet ist.

Die Bildsignale von der Videokamera 10 werden von der Rechnerund Steuer-Einheit ausgewertet. Dabei wird das Ziel erkannt. Die Zielkoordinaten in dem kamerafesten Koordinatensystem werden bestimmt. Dafür werden an sich bekannte digitale Bildverarbeitungs-Verfahren benutzt, wie sie auch in modernen Zielsuchköpfen verwendet werden. Aus den so bestimmten Zielkoordinaten werden Ansteuersignale für die Plattform 14 erzeugt. Diese Ansteuersignale verschwenken die Plattform 14 und damit die Videokamera 10 so, daß das Ziel in die Bildmitte geschoben wird. Dementsprechend erscheint das Ziel auch in der Bildmitte auf dem Bildschirm des Monitors 28. Diese Zentrierung über die Plattform macht die Darstellung des Ziels unabhängig von den Bewegungen des Träger-Kampfflugzeugs.

Bei der Anwendung der beschriebenen Anordnung in Flugzeugen können bei starken Flugmanövern Vibrationen auf die Plattform übertragen werden, welche durch die beschriebene Plattformregelung nicht vollständig korrigiert werden können. In diesem Fall sorgt die Rechner- und Steuer-Einheit 16 für eine geeignete geometrische Transformation des Bildes derart, daß das Bild ruhig in der Mitte des Bildschirmes des Monitors 28 dargestellt wird.

Weiterhin (oder alternativ) ist die Plattform 14 mittels einer Trägheitssensoreinheit inertial stabilisiert. Eine solche inertiale Stabilisierung ist an sich bekannt und daher hier nicht im einzelnen beschrieben. Auch eine solche inertiale Stabilisierung kann dazu führen, daß das Bild des Ziels ruhig in der Mitte des Bildschirmes des Monitors 28 dargestellt wird.

Wenn im Einzelfall die Einweisung durch das RADAR oder durch den Suchkopf des Flugkörpers zu ungenau ist, dann wird das Zoom-Objektiv 12 durch die Rechner- und Steuer-Einheit 16 verstellt. In einer Zielauffassungs-Phase wird das Zoom-Objektiv 12 auf eine kurze Brennweite eingestellt. Dann ergibt sich ein relativ großes Gesichtsfeld. Dabei ist die Bildauflösung entsprechen geringer. Für die Zielauffassung ist aber noch keine hohe Bildauflösung erforderlich. Wenn das Ziel erfaßt und die Videokamera mit ihrer optischen Achse auf das Ziel ausgerichtet ist, wird die Brennweite des Zoom-Objektivs 12 durch die Rechner- und Steuer-Einheit 16 verlängert. Damit wird das Bild des Ziels vergrößert. Es ergibt sich eine hohe Bildauflösung. Diese hohe Bildauflösung gestattet die Identifikation des Ziels.

Durch die Rechner- und Steuer-Einheit 16 wird mittels bekannter Bildverarbeitungs-Verfahren der Kontrast des Bildes des Ziels gegenüber der Umgebung verstärkt. Dadurch wird die Kontur des Ziels ermittelt und im Bild besonders hervorgehoben. Damit kann das Bild leichter vom Beobachter ausgewertet und die Sicherheit bei der Identifikation erhöht werden.

Parallel zu der Darstellung des Ziels auf dem Bildschirm des Monitors 28 und der visuellen Auswertung erfolgt eine automatische Auswertung der Kontur des Ziels in der Rechnerund Steuer-Einheit 16. Zu diesem Zweck sind in der Rechnerund Steuer-Einheit 16 dreidimensionale Modelle der möglichen freundlichen oder feindlichen Flugzeuge gespeichert. Mit Verfahren der wissensbasierten Bildverarbeitung werden der Aspektwinkel und der Flugzeugtyp des Ziels ermittelt. Das Ergebnis wird auf dem Monitor 28 angezeigt.

Durch die beschriebene Kombination von automatischer und teilautomatischer Zielerkennung erhöht die Identifikations-Leistung des Gesamtsystems.

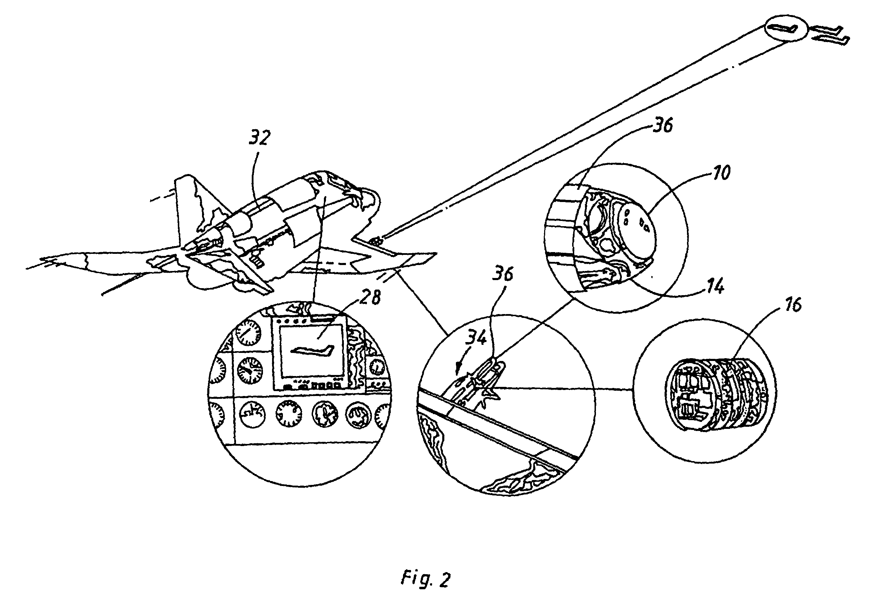

Fig.2 zeigt schematisch den räumlichen Aufbau der Einrichtung zur passiven Freund/Feind-Unterscheidung von Luftzielen. Mit 32 ist ein Kampfflugzeug bezeichnet. An dem Kampfflugzeug 32 sitzt ein Flugkörper-Abschußgerät (Launcher) 34. In der Nase 36 des Flugkörper-Abschußgerätes 34 sitzt die nachgeführte Plattform 14 und die Videokamera 10. In dem Flugkörper-Abschußgerät 34 ist auch die zentrale Rechner- und Steuer-Einheit 16 untergebracht. Im Cockpit des Kampfflugzeugs 32 ist der Monitor 28 angeordnet.

Die Einweisung der optischen Achse der Videokamera 10 erfogt über die Schnittstelle des Flugkörper-Abschußgeräts 34 vom Bord-RADAR des Kampfflugzeugs 32 oder von den Suchkopf-Signalen des Flugkörpers.

Die zentrale Rechner- und Steuer-Einheit 16 besteht aus einer massiv parallelen Rechnerstufe für die pixelorientierte Bildverarbeitung und aus einer Multiprozessor-Stufe mit digitalen Signal-Prozessoren für die Berechnung der Signale zur Plattform-Nachführung und für die höheren Funktionen der Bildauswertung. Die Bildsignale und das Ergebnis der automatischen Bildauswertung werden an das Flugzeug übertragen und dort auf dem Monitor 28 dargestellt. In vielen Kampfflugzeugen ist ein solcher Monitor bereits vorhanden. Dieser Monitor wird dann bei Bedarf auf die vorliegende, spezielle Anwendung umgeschaltet.

Es ist auch möglich, auf die Bildübertragung in das Cockpit des Kampfflugzeugs 32 zu verzichten. Es wird dann nur das Ergebnis der automatischen Identifikation des Ziels über die Schnittstelle des Flugkörper-Abschußgeräts übertragen und dem Piloten visuell durch Symbole im Headup-Display oder akutisch in einem Kopfhörer angezeigt.

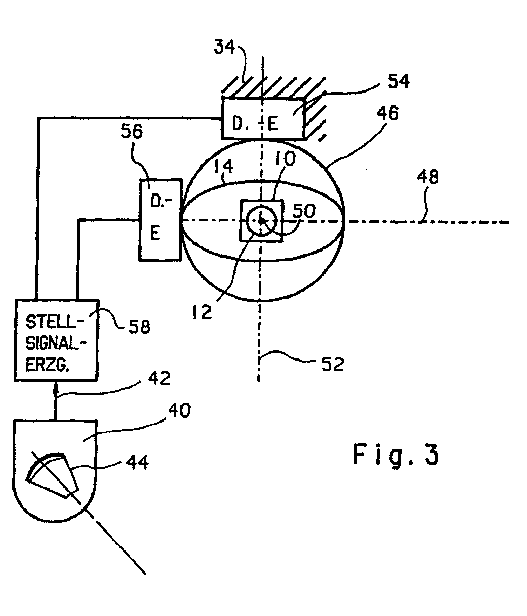

In Fig.3 ist schematisch eine Anordnung dargestellt, bei welcher die Plattform 14 durch Signale ausrichtbar ist, welche von dem Suchkopf 40 des noch in dem Flugkörper-Abschußgerät gehaltenen Flugkörpers an einem Ausgang 42 geliefert werden. Diese Signale richten das optische System 44 des Suchkopfes auf das Ziel aus. Diese Signale können dann auch benutzt werden, um die Videokamera 10 auf das Ziel auszurichten. Die Videokamera 10 ist auf der Plattform 14 angeordnet. Die Plattform 14 ist in einem Rahmen 46 um eine Achse 48 schwenkbar gelagert. Die Achse 48 ist senkrecht zu der optischen Achse 50 des Objektivs 12 der Videokamera. Der Rahmen 46 ist seinerseits im Flugkörper-Abschußgerät 34 um eine Achse 52 schwenkbar, die senkrecht zu der Achse 48 liegt. Die optische Achse 50 des Objektivs 12 ist daher mit zwei Freiheitsgraden um den Schnittpunkt der Achsen 48 und 52 auslenkbar.

Zwischen dem Flugkörper-Abschußgerät 34 und dem Rahmen 46 ist um die Achse 52 ein Stellmotor 54 wirksam, der den Rahmen 46 um die Achse 52 verdrehen kann. An dem Rahmen 46 sitzt auf der Achse 48 ein Stellmotor 56. Durch den Stellmotor 56 ist die Plattform 14 um die Achse 48 gegenüber dem Rahmen 46 verdrehbar. Die Stellmotoren 54 und 56 sind durch Stellsignale ansteuerbar, die von einem Stellsignalerzeuger 58 nach Maßgabe der Signale am Ausgang 42 des Suchkopfes erzeugt werden. Durch diese Stellsignale werden die Stellmotoren 54 und 56 so angesteuert, daß die optische Achse 50 des Objektivs 12 ebenso wie die optische Achse des optischen Systems 44 des Suchkopfes 40 auf das (im Unendlichen liegende) Ziel ausgerichtet werden.

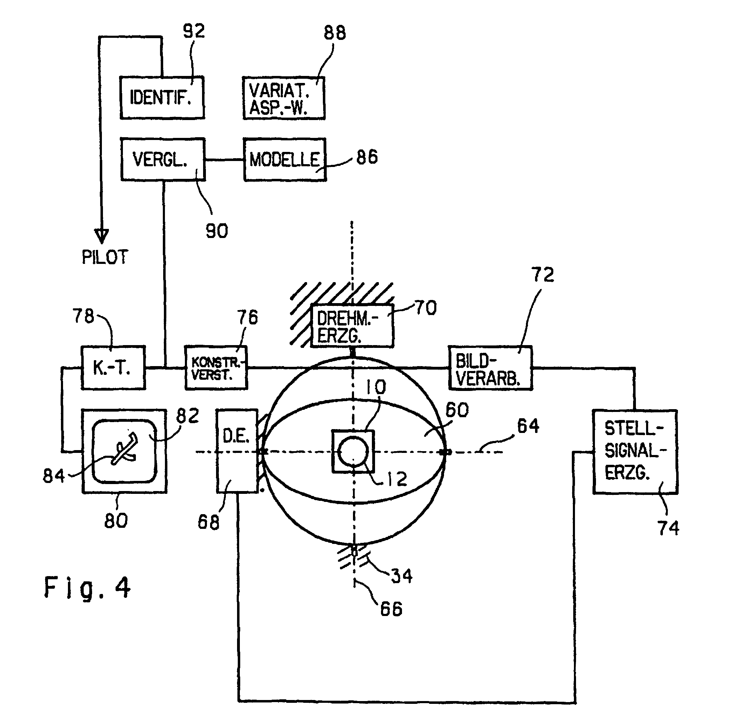

Fig.4 zeigt eine Anordnung, bei welcher die Ausrichtung der Videokamera 10 auf das Ziel durch das einer geeigneten Bildverarbeitung unterworfene Bild der Videokamera 10 selbst erfolgt.

Die Videokamera 10 mit dem Objektiv 12 ist auf einer Plattform 60 angeordnet. Die Plattform 60 ist in einem Rahmen 62 um eine zur optischen Achse des Objektivs senkrechte Achse 64 drehbar gelagert. Der Rahmen ist in dem Flugkörper-Abschußgerät 34 um eine Achse 66 drehbar, die zu der Achse 64 senkrecht verläuft. Ein Stellmotor 68 sitzt an dem Rahmen 62 auf der Achse 64 und wirkt zwischen Rahmen 62 und Plattform. Durch den Stellmotor 68 ist die Plattform 60 relativ zu dem Rahmen 62 verdrehbar. Ein weiterer Stellmotor 70 sitzt an dem Flugkörper-Abschußgerät 34 auf der Achse 66 und wirkt zwischen Flugkörper-Abschußgerät 34 und Rahmen 62. Durch den Stellmotor 70 ist der Rahmen 62 relativ zu dem Flugkörper-Abschußgerät 34 verdrehbar. Auf diese Weise ist die optische Achse des Objektivs 12, ähnlich wie bei der Ausführung von Fig.3, um den Schnittpunkt der Achsen 64 und 66 mit zwei Freiheitsgraden ausrichtbar.

Die Bildinformation von der Videokamera 10 ist einer Bildverarbeitung durch Bildverarbeitungsmittel 72 unterworfen. Die Bildverarbeitungsmittel 72 liefern Signale, welche die Zielablage eines beobachteten Ziels von der optischen Achse des Objektivs 12 wiedergeben in einem kamerafesten Koordinatensystem. Diese Signale sind auf einen Stellsignalerzeuger 74 geschaltet. Der Stellsignalerzeuger 74 schaltet Stellsignale auf die Stellmotoren 68 und 70 auf, durch welche die Plattform so verschwenkt wird, daß die optische Achse des Objektivs 20 auf das Ziel ausgerichtet wird und auf das Ziel ausgerichtet bleibt.

Die Bildinformation der Videokamera 10 wird gleichzeitig auf einen Kontrastverstärker 76 geschaltet. Der Kontrastverstärker bildet einen Teil der Rechner- und Steuereinheit 16. Die Kontrastverstärkung ist eine an sich bekannte Art der Bildverarbeitung und daher hier nicht näher beschrieben. Durch die Kontrastverstärkung wird ein Bild des Ziels mit deutlich gegenüber dem Untergrund hervorgehobenen Konturen erzeugt. Diese Bildinformation wird über Koordinatentransformations-Mittel 78 auf einen Monitor 80 geschaltet. Auf dem Bildschirm 82 des Monitors 80 erscheint dann ein Bild 84 eines Ziels. In der Bildinformation hat jedes Pixel zugeordnete Koordinaten in Form von Spalten- und Zeilenindizes. Diese Koordinaten werden durch die Koordinatentransformations-Mittel jeweils so transformiert, daß das Bild 84 des Zieles jeweils stillstehend in der Mitte des Bildschirmes 82 erscheint, unabhängig von Vibrationen des Flugzeugs, die ggf. auf die Plattform 60 übertragen werden. Der Pilot sieht daher das Bild des Ziels stillstehend und mit starken Kontrasten. Das erleichtert dem Piloten die Erkennung des Zieles als "freundlich" oder "feindlich".

Das die kontrastverstärkte Bildinformation über das Ziel wird mit dreidimensionalen "Modellen" möglicher Ziele verglichen. Die Modelle sind in Fig.4 durch einen Block 86 dargestellt. Nacheinander werden die Konturen der Modelle, wie sie unter den verschiedenen Aspektwinkeln erscheinen, erzeugt. Das ist durch Block 88 dargestellt. Die so erzeugten Konturen werden mit der Bildinformation verglichen, die durch den Kontrastverstärker 76 erzeugt wird. Dieser Vergleich ist durch einen Block 90 dargestellt. Aus dem Vergleich ergibt sich eine Identifikation des Ziels als freundlich oder feindlich. Das ist durch Block 92 dargestellt. Entsprechend dieser Identifikation wird dem Piloten eine visuelle oder akustische Information übermittelt.

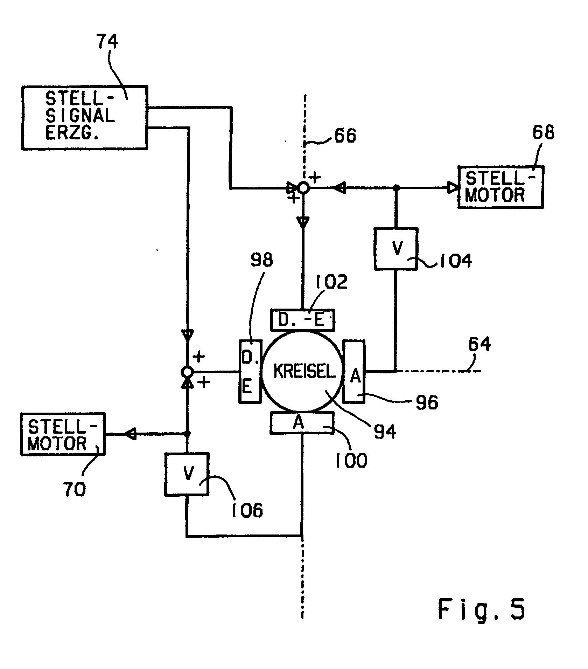

Zur besseren Entkoppelung der Plattform 60 von den Bewegungen des Flugzeuges kann die Plattform 60 mittels eines Inertialsensors, z.B. eines zweiachsigen Wendekreisels 94, stabilisiert sein. Der Wendekreisel 94 ist auf der Plattform 60 so montiert, daß die Eingangsachsen des Wendekreisels 94 parallel zu den Achsen 64 bzw. 66 verlaufen oder mit diesen zusammenfallen. In Fig.5 ist die inertiale Stabilisierung und die Nachführung als Blockdiagramm dargestellt.

Auf der Eingangsachse 64 des Wendekreisels 94 sitzen ein Abgriff 96 und ein Drehmomenterzeuger 98. Auf der Eingangsachse 66 des Wendekreisels 94 sitzen ein Abgriff 100 und ein Drehmomenterzeuger 102. Das Signal des Abgriffs 96 auf der Eingangsachse 64 ist über ein Verstärkernetzwerk 104 auf den Drehmomenterzeuger 102 geschaltet, der auf der Eingangsachse 66 angeordnet ist. Umgekehrt ist das Signal des Abgriffs 100 über ein Verstärkernetzwerk 106 auf den Drehmomenterzeuger 98 geschaltet, der auf der Eingangsachse 66 angeordnet ist. Das ist der übliche Aufbau eines zweiachsigen Wendekreisels, z.B. eines dynamisch abgestimmten Kreisels (DTG). Der Kreiselrotor ist dabei an eine Mittellage elektrisch gefesselt. Die auf die Drehmomenterzeuger 98 und 102 aufgeschalteten Signale sind proportional den Drehgeschwindigkeiten um die Eingangsachsen 66 bzw. 64. Diese Signale werden gleichzeitig auf die Stellmotoren 68 bzw. 70 aufgeschaltet. Eine Drehbewegung des Flugzeugs wird dabei durch eine Stellbewegung der Stellmotoren 68 und 70 kompensiert. Die Plattform 60 wird von den Bewegungen des Flugzeugs entkoppelt.

Die aus der Zielablage relativ zu der Videokamera 10 abgeleiteten Stellsignale von dem Stellsignalerzeuger 74 sind zusätzlich zu den verstärkten Abgriffsignalen von den Abgriffen 100 und 96 auf die Drehmomenterzeuger 98 bzw. 102 aufgeschaltet. Dadurch wird der Wendekreisel 94 entsprechend präzediert. Die Plattform 60 folgt über die Stellmotoren 68 und 70 dieser Präzession.

## Patentansprüche

1. Einrichtung zur passiven Freund/Feind-Unterscheidung von Zielen, insbesondere von Luftzielen, bei welcher ein zu identifizierendes Ziel mittels einer Videokamera (10) beobachtet wird, **dadurch gekennzeichnet, daß**
(a) die Videokamera (10) um zwei Achsen ausrichtbar gelagert ist und durch eine von Zielstrahlung gesteuerte Nachführeinrichtung auf das Ziel ausrichtbar ist, und
(b) Bildverarbeitungsmittel vorgesehen sind zur automatischen Auswertung des von der Videokamera (10) erhaltenden Bildes des Ziels zur Erkennung freundlicher und feindlicher Ziele.

2. Einrichtung nach Anspruch 1, **dadurch gekennzeichnet, daß** die Zielstrahlung von einem Flugkörpersuchkopf erfaßt wird, durch den die Nachführeinrichtung steuerbar ist.

3. Einrichtung nach Anspruch 1, **dadurch gekennzeichnet, daß** die Zielstrahlung Radarstrahlung ist, die an dem Ziel reflektiert wird.

4. Einrichtung nach Anspruch 1, **dadurch gekennzeichnet, daß** die Zielstrahlung von der Videokamera (10) erfaßt wird und die Nachführeinrichtung von durch Bildverarbeitung des Fernsehbildes gewonnenen Steuersignalen gesteuert ist.

5. Einrichtung nach einem der Ansprüche 1 bis 4, **dadurch gekennzeichnet, daß** die Videokamera (10) auf einer inertial stabilisierten Plattform (14) angeordnet ist.

6. Einrichtung nach einem der Ansprüche 1 bis 5, **dadurch gekennzeichnet, daß** das von der Videokamera (10) erfaßte Ziel auf dem Bildschirm eines Monitors (28) abgebildet wird.

7. Einrichtung nach Anspruch 6, **dadurch gekennzeichnet, daß** das Bild des Ziels auf dem Monitor (28) durch mittels Bildverarbeitung gewonnener Transformations-Signale im wesentlichen stillstehend in der Mitte des Bildschirms gehalten wird.

8. Einrichtung nach einem der Ansprüche 1 bis 7, **dadurch gekennzeichnet, daß** die Videokamera (10) ein Zoom-Objektiv (12) aufweist, das in einer Zielauffassungs-Phase auf eine relativ kurze Brennweite und nach Zielauffassung und Ausrichtung der optischen Achse der Videokamera (10) auf das Ziel auf eine relativ lange Brennweite und entsprechend stärkere Vergrößerung einstellbar ist.

9. Einrichtung nach einem der Ansprüche 6 bis 8, **gekennzeichnet durch** Bildverarbeitungsmittel zur Verstärkung des Kontrastes des Zielbildes gegenüber der Umgebung.

## Claims

1. Device for the passive friend-or-foe discrimination of targets, in particular of air targets, with which a target to be identified is observed by means of a video camera (10), **characterized in that**
(a) the video camera (10) is mounted to be aligned about two axes and adapted to be aligned with the target by a follow-up device controlled by target radiation, and
(b) image processing means are provided for automatically evaluating the image of the target received by the video camera (10) to recognize friendly and enemy targets.

2. Device as set forth in claim 1, **characterized in that** the target radiation is detected by a missile seeker head adapted to control the follow-up device.

3. Device as set forth in claim 1, **characterized in that** the target radiation is RADAR radiation reflected by the target.

4. Device as set forth in claim 1, **characterized in that** the target radiation is detected by the video camera (10) and the follow-up device is controlled by control signals obtained by image processing of the video image.

5. Device as set forth in any one of the claims 1 to 4, **characterized in that** the video camera (10) is mounted on an inertially stabilized platform (14).

6. Device as set forth in any one of the claims 1 to 5, **characterized in that** the target detected by the video camera (10) is displayed on the screen of a monitor (28).

7. Device as set forth in claim 6, **characterized in that** the image of the target at the monitor (28) is held substantially stationary in the centre of the screen by transformation signals obtained by means of image processing.

8. Device as set forth in any one of the claims 1 to 7, **characterized in that** the video camera (10) comprises a zoom objective (12) adjustable to a relatively short focal length during a target acquisition phase and to a relatively long focal length and correspondingly larger magnification after target acquisition and alignment of the optical axis of the video camera (10) with the target.

9. Device as set forth in any one of the claims 6 to 8, **characterized by** image processing means for enhancing the contrast of the target image relative to its background.

## Revendications

1. Installation destinée à la différenciation passive ami/ennemi de cibles, notamment de cibles aériennes pour laquelle une cible devant être identifiée est observée au moyen d'une caméra vidéo (10), **caractérisée par le fait que**
(a) la caméra vidéo (10) est logée de façon susceptible d'être orientée autour de deux axes et est susceptible d'être orientée sur la cible grâce à un suiveur commandé par le rayonnement de la cible, et
(b) des moyens de traitement d'images sont prévus afin d'évaluer automatiquement l'image de la cible reçue par la caméra vidéo (10) destinée à reconnaître des cibles ennemies et des cibles amies.

2. Installation selon la revendication 1, **caractérisée par le fait que** le rayonnement de la cible est saisi par une tête chercheuse de missile grâce à laquelle le suiveur est susceptible d'être commandé.

3. Installation selon la revendication 1, **caractérisée par le fait que** le rayonnement de la cible est un rayonnement radar réfléchi au niveau de la cible.

4. Installation selon la revendication 1, **caractérisée par le fait que** le rayonnement de la cible est saisi par la caméra vidéo (10) et le suiveur est commandé par des signaux de commande obtenus grâce au traitement d'images de l'image de télévision.

5. Installation selon l'une des revendications 1 à 4, **caractérisée par le fait que** la caméra vidéo (10) est disposée sur une plate-forme (14) à stabilisation inertielle.

6. Installation selon l'une des revendications 1 à 5, **caractérisée par le fait que** la cible saisie par la caméra vidéo (10) est reproduite sur l'écran d'un moniteur (28).

7. Installation selon la revendication 6, **caractérisée par le fait que** l'image de la cible sur le moniteur (28) est maintenue sensiblement fixement au milieu de l'écran grâce à des signaux de transformation obtenus grâce au traitement d'images.

8. Installation selon l'une des revendications 1 à 7, **caractérisée par le fait que** la caméra vidéo (10) présente un zoom (12) susceptible d'être réglé au cours d'une phase de détection de cible sur une distance focale relativement courte et après la détection de la cible et l'orientation de l'axe optique de la caméra vidéo (10) sur la cible sur une distance focale relativement longue et en fonction d'un agrandissement plus important.

9. Installation selon l'une des revendications 6 à 8, **caractérisée par** des moyens de traitement d'images destinés à intensifier le contraste de l'image de la cible par rapport à l'environnement.
